Europäisches Patentamt

European Patent Office

Office européen des brevets

(19)

(11) Numéro de publication: **0 236 162**
**B1**

(12) **FASCICULE DE BREVET EUROPEEN**

(45) Date de publication du fascicule du brevet: 02.05.90

(51) Int. Cl.⁵: **A 01 G 1/06**

(21) Numéro de dépôt: 87400142.3

(22) Date de dépôt: 21.01.87

(54) **Machine à greffer.**

(30) Priorité: 27.01.86 FR 8601117

(43) Date de publication de la demande:
09.09.87 Bulletin 87/37

(45) Mention de la délivrance du brevet:
02.05.90 Bulletin 90/18

(84) Etats contractants désignés:
CH DE ES FR IT LI

(56) Documents cités:
DE-C- 124 191
FR-A- 998 909
FR-A-2 110 665
FR-A-2 247 965
FR-A-2 539 951

(73) Titulaire: GROUPEMENT CHAMPENOIS
D'EXPLOITATION VITICOLE
11, Avenue de Champagne B. P. 186
F-51206 Epernay/Cédex (FR)

(72) Inventeur: Fresne, Jean-Louis
"Le petit fleury" Sermiers
F-51500 Rilly La Montagne (FR)
Inventeur: Collas, Alain
Rue Heidsiek
F-51360 Verzenay (FR)
Inventeur: Vesselle, Georges
16, rue des Postes Bouzy
F-51150 Tours sur Marne (FR)

(74) Mandataire: Phélip, Bruno et al
c/o Cabinet Harlé & Phélip 21, rue de La
Rochefoucauld
F-75009 Paris (FR)

Courier Press, Leamington Spa, England.

## Description

La présente invention concerne une machine à greffer notamment une machine effectuant mécaniquement le greffage en vert. Il est bien connu que le greffage est une opération nécessaire pour la culture de certaines plantes comme la vigne, les arbres fruitiers, les rosiers, la tomate et autres.

Actuellement cette opération de greffage est réalisée sur du matériel aoûté durant le repos hivernal soit manuellement soit mécaniquement. D'un côté il y a le greffon qui porte les yeux et de l'autre le porte-greffe qui a ou aura les racines. Le développement de nouvelles technologies telles que la sélection clonale et la culture in-vitro permettent d'obtenir du matériel végétatif toute l'année et d'une meilleure qualité que les productions traditionnelles. De plus les cadences de production sont très élevées. Ce matériel ne peut être planté directement pour des questions de résistance à certaines maladies ou de production; il est donc nécessaire de le greffer.

A l'heure actuelle, ce nouveau type de greffage est effectué manuellement avec des cadences très faibles et une précision toute relative. En effet le porte-greffe et le greffon ont des dimensions très petites, à titre d'exemple, un diamètre de l'ordre de 1,5 à 2 millimètres et ce travail est difficile à réaliser. Il est donc nécessaire de mettre au point une machine permettant d'effectuer ce greffage pour produire des plants de qualité et ayant une cadence élevée pour que cette nouvelle technologie soit économiquement rentable.

L'invention a pour objet une machine à greffer qui supprime le greffage manuel et qui assure une bonne solidarisation entre le greffon et le porte-greffe.

La machine selon la présente invention permet de réaliser mécaniquement l'opération de greffage avec des cadences élevées tout en respectant les impératifs techniques de qualité.

Le principe de la greffe utilisé dans la machine selon la présente invention est basé sur la greffe en biseau.

La machine selon la présente invention permet de réaliser la coupe du greffon, la coupe du porte-greffe et l'assemblage des deux parties.

La coupe du greffon en biseau est réalisée par deux lames ayant une forme, une position et une inclinaison déterminées afin d'avoir une coupe nette, parfaite et permettant d'avoir un calibrage le plus régulier possible. La précision de la réalisation de ces opérations est très importante pour que les contacts entre les tissus des deux parties soient le plus parfait possible. Ceci est le facteur primordial pour une bonne reprise.

La coupe du porte-greffe est réalisée par une lame effectuant une fente qui doit toujours être au milieu de la tige et qui a une profondeur constante. De plus, cette lame a une forme particulière permettant d'écarter les deux parties de la tige pour permettre à la pointe du greffon de venir s'encastrer dans la tige du porte-greffe.

La précision de la réalisation de ces opérations est primordiale. En effet il est nécessaire que les tissus du greffon soient parfaitement en contact avec ceux du porte-greffe, afin de faciliter la formation du cal, facteur de réussite du greffage.

L'invention propose donc une machine pour effectuer la greffe en biseau consistant à greffer un greffon à un porte-greffe comprenant en combinaison:

— un bâti muni à la partie inférieure d'une semelle supportant deux colonnes de guidage et à la partie supérieure d'une entretoise de réglage transversal de l'écartement desdites colonnes;

— un support de greffon et une butée de blocage disposés de part et d'autre des deux colonnes de guidage et fixés sur ladite semelle;

— deux ensembles de traitement superposés montés coulissants et de façon indépendante sur les colonnes de guidage du bâti, en position inactive; l'ensemble supérieur est maintenu contre l'ensemble inférieur par deux moyens élastiques reliés à l'entretoise et disposés sur lesdites colonnes de guidage tandis que l'ensemble inférieur est maintenu par deux autres moyens élastiques montés sur les deux colonnes de guidage et reliés à la semelle, l'ensemble supérieur présente intérieurement une plaque racleuse assujettie à deux moyens élastiques et un dispositif de coupe de porte-greffe traversant ladite plaque racleuse alors que l'ensemble inférieur présente dans sa partie supérieure un poste de réception du porte-greffe en coïncidence avec le dispositif de coupe de l'ensemble supérieur et à sa partie inférieure un dispositif de coupe du greffon disposé également dans l'alignement vertical du poste de réception du porte-greffe, la relation en position active entre les deux ensembles étant telle qu'après l'insertion du porte-greffe dans le poste de réception de l'ensemble inférieur, le dispositif de coupe de l'ensemble supérieur incise le porte-greffe, les deux ensembles sont abaissés à l'aide d'un moyen de manoeuvre, le dispositif de cupe de l'ensemble inférieur effectue la coupe en biseau du greffon et est arrêté par la butée de blocage l'ensemble supérieur est ainsi immobilisé au niveau du support de greffon et le porte-greffe incisé est solidarisé avec le greffon, les deux ensembles étant ensuite ramenés à l'aide du moyen de manoeuvre en position inactive pour un nouveau cycle de greffage.

La présente invention concerne également les caractéristiques ci-après considérées isolément ou selon toutes leurs combinaisons techniquement possibles:

— le dispositif de coupe du porte-greffe est une lame de forme triangulaire portant en bout une butée pour la détermination de la longueur de coupe;

— la lame de coupe du porte-greffe est montée coulissante avec rappel par ressort dans l'ensemble supérieur;

— le dispositif de coupe du greffon est constitué de deux lames opposées solidaires ayant chacune la forme d'une pyramide inversée dont les tranchants sont directement en vis-à-vis;

— les lames de coupe du greffon sont à biseau simple;

— le poste de réception du porte-greffe est une gorge centrale ménagée au centre de la partie supérieure de l'ensemble inférieur, la plaque racleuse appuyant sur ladite gorge pour le positionnement du porte-greffe;

— le poste de réception du support de greffon est un V de centrage dans lequel est inséré le greffon;

— le moyen de manoeuvre est constitué d'une pédale et d'un câble;

— l'ensemble supérieur présente la forme d'un U inversé;

— les moyens élastiques sont des ressorts;

— le diamètre du greffon est compris entre 1 et 10 millimètres;

— la coupe en biseau par les deux lames de coupe de l'ensemble inférieur est effectuée selon une hauteur comprise entre 5 et 10 millimètres;

— l'angle de la pointe du greffon se situe entre 16 ± 4°C;

— le dispositif de coupe du porte-greffe est une lame de forme triangulaire ou tout autre moyen équivalent permettant de réaliser une fente et d'écarter les deux parties en les maintenant en forme de V afin de réaliser l'emboîtement.

Divers avantages et caractéristiques de la présente invention ressortiront de la description détaillée ci-après faite en regard des dessins annexés sur lesquels:

— Figure 1 est une vue de face de la machine à greffer;

— Figure 2 est une vue de côté de la machine à greffer de la figure 1;

— Figure 3 est une coupe partielle prise suivant la ligne III—III de la figure 2;

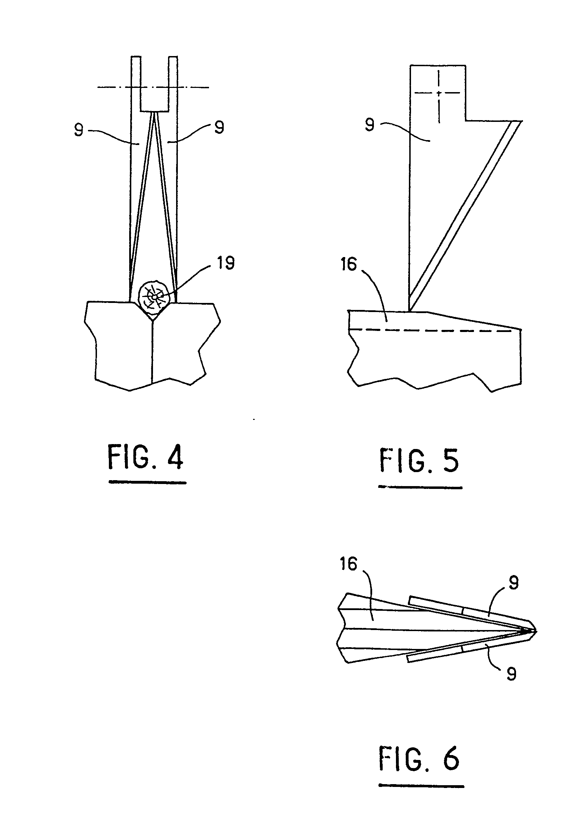

— Figure 4 illustre la relation entre le dispositif de coupe du greffon et le greffon inséré dans le poste de réception de son support;

— Figure 5 montre le sens de déplacement des lames du dispositif de coupe du greffon et l'angle de coupe desdites lames;

— Figure 6 illustre un mode de réalisation de l'opération de coupe en biseau des lames du dispositif de coupe du greffon;

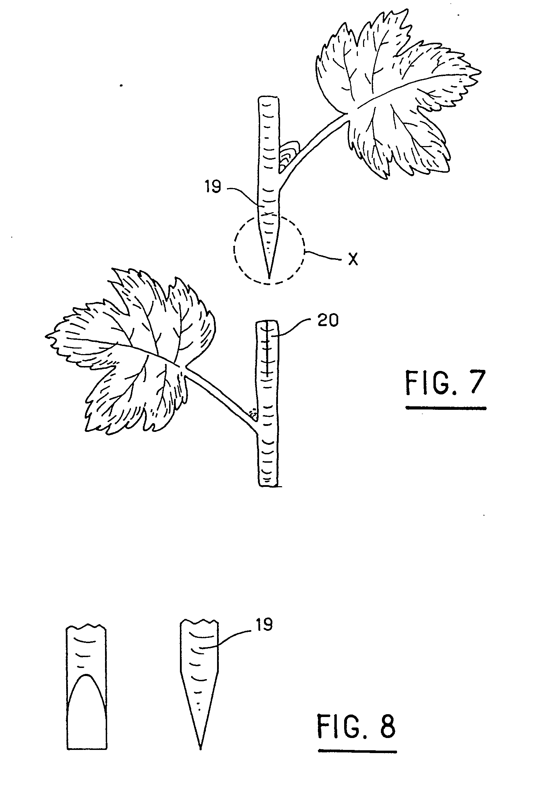

— Figure 7 illustre un greffon et un porte-greffe à assujettir;

— Figure 8 est un détail de la partie X encerclée en pointillés sur la figure 7.

Aux dessins annexés ou les mêmes chiffres de référence désignent des parties analogues, la machine selon la présente invention comprend un bâti désigné par la référence générale 1. Le bâti comprend une semelle 21 supportant deux colonnes 2 sur lesquelles viennent coulisser deux ensembles supérieur et inférieur indépendants 3 et 4. L'écartement des deux colonnes 2 est maintenu dans leur partie supérieure par une entretoise 5. Sur la semelle 21 se trouvent fixés de part et d'autre des deux colonnes 2 le support de greffon 6 et une butée 7.

L'ensemble inférieur 3 coulissant sur les deux colonnes 2 comprend dans sa partie supérieure un poste de réception de porte-greffe 8 sous la forme d'une gorge de centrage dans laquelle vient se positionner le porte-greffe 20. Cet ensemble inférieur 3 supporte, en outre, deux lames 9 qui effectuent la coupe du greffon 19. Ces lames 9 ont une position d'attaque permettant de réaliser une coupe en biseau parfaite. Cet ensemble inférieur 3 est maintenu en position haute par deux ressorts 10 montés sur les colonnes de guidage 2 et reliés à la semelle 21. Il comprend dans sa partie inférieure les deux lames 9 qui sont disposées selon un alignement vertical avec la gorge de centrage 8 dans laquelle repose le porte-greffe 20.

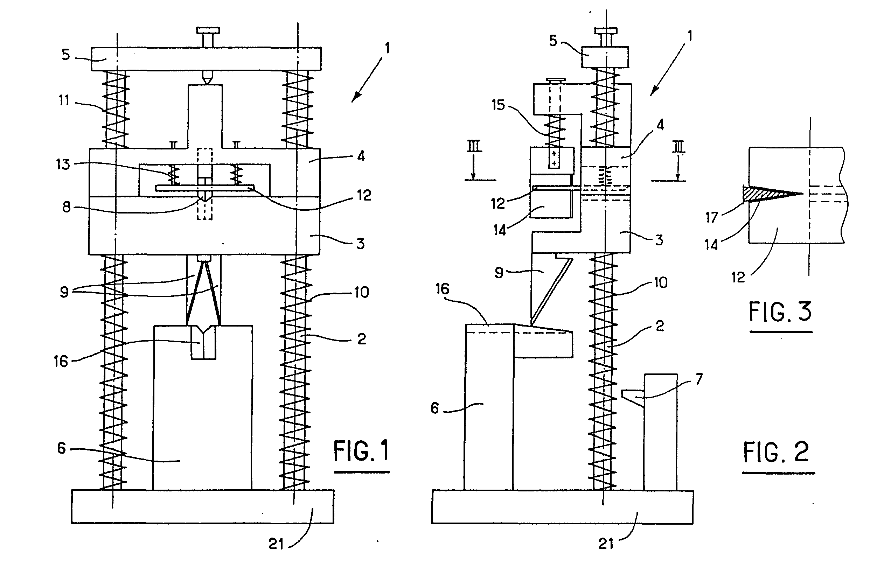

L'ensemble supérieur 4 coulissant sur les deux colonnes 2 est indépendant de l'ensemble inférieur 3. Il est maintenu contre celui-ci au moyen de deux ressorts 11 montés également sur les deux colonnes de guidage 2 et reliés à l'entretoise 5. L'ensemble 4 comprend une plaque racleuse 12 et une lame 14. La plaque racleuse 12 montée sur ressort 13 a pour fonction d'une part de positionner correctement le porte-greffe dans la gorge de centrage 8 avant incision de celui-ci et d'autre part de racler la lame 14 lors de l'emboîtement du greffon 19 dans le porte-greffe 20. De par sa forme triangulaire, la lame 14 assure l'incision du porte-greffe 20 et l'ouverture de cette incision de manière à permettre l'introduction du greffon 19 dans le porte-greffe 20. Cette lame 14 est montée coulissante avec rappel par ressort 15 dans l'ensemble supérieur 4. L'ensemble supérieur tel qu'il est représenté sur la figure 1 présente la forme d'un U inversé, toutefois il est bien évident qu'une autre forme appropriée peut convenir. Le support 6 possède à sa partie supérieure un poste de réception de greffon 16 sous la forme d'un V de centrage dans lequel vient se loger le greffon 19. Le support 6 est fixé sur la semelle 21 de part et d'autre des deux colonnes de guidage 2 et à l'opposé de la butée de blocage 7 de la machine. Dans une forme de réalisation illustrée sur les dessins, le support 6 avec sa gorge de centrage ou en forme de V 16 sert de contre-lame aux lames 9 de coupe du greffon 19. L'ensemble de coupe 9 situé à la partie inférieure de l'ensemble inférieur 3 effectue une coupe en biseau du greffon 19 disposé dans le support de greffon 6 selon une hauteur comprise entre 5 et 10 millimètres et l'angle de la pointe du greffon se situe entre 14 ± 2°C.

On décrit ci-après le fonctionnement de la machine à greffer selon la présente invention. Pour la mise en oeuvre du greffage sur la machine à greffer selon la présente invention, le greffon 19 est positionné dans son V de centrage 16. Le porte-greffe 20 est enfoncé dans son V de centrage 8 et vient se fendre sur la lame 14. Une butée 17 prévue en bout de la lame 14 détermine la longueur de coupe, la plaque 12 est chanfreinée pour faciliter l'introduction du porte-greffe 20. A l'aide d'une pédale et d'un câble non représentés sur les dessins annexés, les deux ensembles inférieur et supérieur 3, 4 sont abaissés, les lames 9 du dispositif de coupe effectuent la coupe du greffon 19 et la lame 14 arrive au contact dudit greffon 19. A ce moment, tandis que les deux ensembles 3 et 4 continuent à descendre, la lame 14 devient bloquée et ne bouge plus et le porte-greffe 20 descend le long de ladite lame 14 entraînée par le racleur 12 et les deux parties se trouvent écartées pour venir encastrer le biseau du greffon 19. A ce moment, les ensembles supérieur et inférieur 3 et 4 se trouvent bloqués par la butée 7. Au moyen du dispositif de manoeuvre sous la forme d'une pédale et d'un câble, on fait remonter l'ensemble 4 tandis qu'on maintient l'ensemble 3 dans sa position basse. On dégage alors la plante greffée et lorsque l'on lâche la pédale de manoeuvre l'ensemble inférieur 3 remonte afin qu'une deuxième greffe puisse commencer selon le cycle indiqué ci-dessus.

## Revendications

1. Machine pour effectuer la greffe en biseau consistant à greffer un greffon (19) à un porte-greffe (20) comprenant en combinaison:

— un bâti (1) muni à la partie inférieure d'une semelle (21) supportant deux colonnes de guidage (2) et à la partie supérieure une entretoise (5) de réglage transversal de l'écartement desdites colonnes (2);

— un support de greffon (6) et une butée de blocage (7) disposés de part et d'autre des deux colonnes de guidage (2) et fixés sur ladite semelle (21);

— deux ensembles de traitement superposés (3, 4) montés coulissants et de façon indépendante sur les colonnes de guidage (2) du bâti (1), en position inactive; l'ensemble supérieur (4) est maintenu contre l'ensemble inférieur (3) par deux moyens élastiques (11) reliés à l'entretoise (5) et disposés sur lesdites colonnes de guidage (2) tandis que l'ensemble inférieur (3) est maintenu par deux autres moyens élastiques (10) montés sur les deux colonnes de guidage (2) et reliés à la semelle (21), l'ensemble supérieur (4) présente intérieurement une plaque racleuse (12) assujettie à deux moyens élastiques (13) et un dispositif de coupe (14) de porte-greffe (20) traversant ladite plaque racleuse (12) alors que l'ensemble inférieur (3) présente dans sa partie supérieure un poste de réception (8) du porte-greffe en coïncidence avec le dispositif de coupe (14) de l'ensemble supérieur (4) et à sa partie inférieure un dispositif de coupe (9) de greffon (19) disposé également dans l'alignement vertical du poste de réception (8) du porte-greffe (20), la relation en position active entre les deux ensembles (3, 4) étant telle qu'après l'insertion du porte-greffe (20) dans le poste de réception (8) de l'ensemble inférieur (3), le dispositif de coupe (14) de l'ensemble supérieur (4) incise le porte-greffe (20), les deux ensembles (3, 4) sont abaissés à l'aide d'un moyen de manoeuvre, le dispositif de coupe (9) de l'ensemble inférieur (3) effectue la coupe en biseau du greffon (19) et est arrêté par la butée de blocage (7), l'ensemble supérieur (4) est ainsi immobilisé au niveau du support (16) de greffon et le porte-greffe incisé (20) est solidarisé avec le greffon (19), les deux ensembles (3, 4) étant ensuite ramenés à l'aide du moyen de manoeuvre en position inactive pour un nouveau cycle de greffage.

2. Machine selon la revendication 1, caractérisée en ce que le dispositif de coupe (14) du porte-greffe (20) est une lame (14) de forme triangulaire portant en bout une butée (17) pour la détermination de la longueur de coupe.

3. Machine selon l'une des revendications 1 ou 2, caractérisée en ce que la lame de coupe (14) du porte-greffe (20) est montée coulissante avec rappel par ressort (15) dans l'ensemble supérieur (4).

4. Machine selon la revendication 1, caractérisée en ce que le dispositif de coupe (9) du greffon (19) est constitué de deux lames à un biseau (9) opposées solidaires ayant chacune la forme d'une pyramide inversée dont les tranchants sont directement en vis-à-vis.

5. Machine selon la revendication 1, caractérisée en ce que le poste de réception (8) du porte-greffe (20) est une gorge centrale ménagée au centre de la partie supérieure de l'ensemble inférieur (3), la plaque racleuse (12) appuyant sur ladite gorge pour le positionnement du porte-greffe (20).

6. Machine selon l'une quelconque des revendications 1 à 5, caractérisée en ce que le poste de réception (16) du support (6) de greffon (20) est un V de centrage dans lequel est inséré le greffon (20).

7. Machine selon la revendication 1, caractérisée en ce que tous les mouvements sont réalisés par un seul moyen de manoeuvre constitué d'une pédale et d'un câble ou d'un autre moyen à actionnement électrique, hydraulique ou pneumatique.

8. Machine selon l'une quelconque des revendications 1 à 7, caractérisée en ce que l'ensemble supérieur (4) présente la forme d'un U inversé.

9. Machine selon l'une quelconque des revendications 1 à 8, caractérisée en ce que les moyens élastiques sont des ressorts (10, 11, 13).

10. Machine suivant l'une quelconque des revendications 1 à 9, caractérisée en ce que le diamètre du greffon (20) est compris entre 1 et 10 millimètres.

11. Machine selon l'une quelconque des revendications 1 à 10, caractérisée en ce que la coupe en biseau par les deux lames de coupe (9) de l'ensemble inférieur (3) est effectuée selon une hauteur comprise entre 5 et 10 millimètres.

12. Machine selon l'une quelconque des revendications 1 à 11, caractérisée en ce que l'angle de la pointe du greffon (19) se situe entre $16 \pm 4°$.

13. Machine selon l'une quelconque des revendications 1 à 12, caractérisée en ce que le dispositif de coupe (14) du porte-greffe (20) est une lame (14) de forme triangulaire ou tout autre moyen équivalent permettant de réaliser une fente et d'écarter les deux parties en les maintenant en forme de V afin de réaliser l'emboîtement.

**Patentansprüche**

1. Maschine zum schrägkantigen Pfropfen eines Pfropfteils (19) auf einer Unterlage (20), umfassend in einer Kombination:
— einen Rahmen (1), der an seinem unteren Abschnitt mit einer Grundplatte (21) versehen ist, welche zwei Führungssäulen (2) und an seinem oberen Abschnitt eine Querstrebe (5) zur Einstellung quer zum Abstand der Säulen (2) trägt;
— einen Pfropfreisträger (6) und einen Blockieranschlag (7), die zu beiden Seiten der beiden Führungssäulen (2) angeordnet sind und auf der Grundplatte (21) befestigt sind;
— zwei übereinander angeordnete Behandlungseinrichtungen (3, 4), die voneinander unabhängig gleitbeweglich an den Führungssäulen (2) des Rahmens (1) angebracht sind, wobei in Ruhestellung die obere Behandlungseinrichtung (4) gegen die untere Behandlungseinrichtung (3) durch zwei elastische Mittel (11) gehalten wird, die an der Querstrebe (5) angebracht sind und mit den Führungssäulen (2) verbunden sind, während die untere Behandlungseinrichtung (3) durch zwei andere elastische Mittel (10) gehalten wird, die an den beiden Führungssäulen (2) angebracht sind und mit der Grundplatte (21) verbunden sind, wobei die obere Behandlungseinrichtung (4) im Inneren eine Abschabplatte (12) aufweist, die zwei elastischen Mitteln (13) ausgesetzt ist, sowie eine Schneideinrichtung (14) der Unterlage (20) aufweist, welche durch die Abschabplatte (12) hindurchtritt, wobei die untere Behandlungseinrichtung (3) auf ihrem oberen Abschnitt einen Aufnahmestützpunkt (8) der Unterlage aufweist, die zu der Schneideinrichtung (14) der oberen Behandlungseinrichtung (4) ausgerichtet ist, und an ihrem unteren Abschnitt eine Pfropfreisschneideinrichtung (9) aufweist, die ebenfalls vertikal zum Aufnahmestützpunkt (8) der Unterlage (20) ausgerichtet ist, wobei in Arbeitsstellung zwischen den beiden Behandlungseinrichtungen (3, 4) eine solche Relativlage vorliegt, daß nach Einbringen des Pfropfreis (20) in den Aufnahmestützpunkt (8) der unteren Behandlungseinrichtung (3) die Schneideinrichtung (14) der oberen Behandlungseinrichtung (4) den Pfropfreis (20) einschneidet, die beiden Behandlungseinrichtungen (3, 4) mittels eines Verschiebemittels abgesenkt werden, die Pfropfreisschneideinrichtung (9) der unteren Behandlungseinrichtung (3) den schrägkantigen Einschnitt in das Pfropfreis (19) durchführt und durch den Blockieranschlag (7) angehalten wird, so daß die obere Behandlungseinrichtung (4) auf Höhe des Pfropfreisträgers (16) angehalten wird und das eingeschnittene Pfropfreis (20) mit der Unterlage (19) verbunden wird, wonach die beiden Behandlungseinrichtungen (3, 4) mittels des Verschiebemittels in Ruhestellung für einen neuen Pfropfvorgang zurückgeführt werden.

2. Maschine nach Anspruch 1, dadurch gekennzeichnet, daß die Schneideinrichtung (14) der Unterlage (20) eine dreieckförmige Klinge (14) ist, die am Ende einen Anschlag (17) zur Bestimmung der Schnittlänge trägt.

3. Maschine nach einem der Ansprüche 1 oder 2, dadurch gekennzeichnet, daß die Schneidklinge (14) der Unterlage (20) gleitbeweglich mit einer Rückholfeder (15) in der oberen Behandlungseinrichtung montiert ist.

4. Maschine nach Anspruch 1, dadurch gekennzeichnet, daß die Pfropfreisschneideinrichtung (9) aus zwei Klingen mit Schrägkante (9) besteht, die einander entgegengesetzt zusammenhängen und von denen jede die Form einer umgekehrten Pyramide aufweist, deren Schneiden direkt gegenüber liegen.

5. Maschine nach Anspruch 1, dadurch gekennzeichnet, daß der Aufnahmestützpunkt (8) der Unterlage (20) eine mittlere Rille ist, die aus der Mitte des oberen Abschnitts der unteren Behandlungseinrichtung (3) ausgeformt ist, und daß sich die Abschabplatte (12) auf der Rille zur Positionierung der Unterlage (20) abstützt.

6. Maschine nach einem der Ansprüche 1—5, dadurch gekennzeichnet, daß der Aufnahmestützpunkt (16) des Unterlagenträgers (6) ein Zentrier-V ist, in den die Unterlage (20) eingelegt ist.

7. Maschine nach Anspruch 1, dadurch gekennzeichnet, daß alle Bewegungen durch ein einziges Verschiebemittel bewirkt werden, welches aus einer Pedale und einem Kabel oder einem anderen elektrisch, hydraulisch oder pneumatisch betätigten Mittel besteht.

8. Maschine nach einem der Ansprüche 1—7, dadurch gekennzeichnet, daß die obere Behandlungseinrichtung (4) als umgekehrtes U ausgebildet ist.

9. Maschine nach einem der Ansprüche 1—8, dadurch gekennzeichnet, daß die elastischen Mittel Federn (10, 11, 13) sind.

10. Maschine nach einem der Ansprüche 1—9, dadurch gekennzeichnet, daß der Durchmesser der Unterlage (20) in dem Bereich zwischen 1 und 10 mm liegt.

11. Maschine nach einem der Ansprüche 1—10, dadurch gekennzeichnet, daß der schrägkantige Schnitt durch die beiden Schneidklingen (9) der unteren Behandlungseinrichtung (3) in einer Höhe zwischen 5 und 10 mm durchgeführt wird.

12. Maschine nach einem der Ansprüche 1—11, dadurch gekennzeichnet, daß der Winkel der Spitze des Pfropfreis zwischen 16 ± 4° liegt.

13. Maschine nach einem der Ansprüche 1—12, dadurch gekennzeichnet, daß die Schneideinrichtung (14) der Unterlage (20) eine dreieckförmige Klinge (14) oder ein anderes gleich wirkendes Mittel ist, welches die Bildung eines Spalts und das Auseinanderspreitzen der beiden Teile, indem sie in V-Form gehalten werden, ermöglicht, um die Verbindung durchzuführen.

**Claims**

1. Machine for carrying out tapered grafting consisting of grafting a scion (19) to a stock (20), comprising in combination:
— a frame (1) provided at the bottom with a base (21) supporting two guide columns (2), and at the top with a brace (5) for the transverse adjustment of the distance between said columns (2);

— a scion support (6) and a locking stop (7) which are disposed one on each side of the two guide columns (2) and are fixed on said base (21);

— two superposed treatment assemblies (3, 4) mounted for sliding and independently on the guide columns (2) of the frame (1), in the inoperative position the top assembly (4) is held against the bottom assembly (3) by two elastic means (11) connected to the brace (5) and disposed on said guide columns (2), while the bottom assembly (3) is held by two other elastic means (10) mounted on the two guide columns (2) and connected to the base (21); the top assembly (4) has in its interior a scraper plate (12) fastened to two elastic means (13) and a stock (20) cutter device (14) crossing said scraper plate (12), while the bottom assembly (3) has in its top part a stock receiver (8) coinciding with the cutter device (14) of the top assembly (4), and in its bottom part a scion (19) cutter device (9) likewise disposed in vertical alignment with the stock (20) receiver (8), the relationship between the two assemblies (3, 4) in the operative position being such that after insertion of the stock (20) into the stock receiver (8) of the bottom assembly (3) the cutter device (14) of the top assembly (4) will make an incision in the stock (20), the two assemblies (3, 4) are lowered with the aid of a manipulating means, the cutter device (9) of the bottom assembly (3) makes the tapered cut on the scion (19) and is stopped by the locking stop (7), so that the top assembly (4) is thus immobilized at the scion support (16) and the stock (20) in which the incision has been made is secured to the scion (19), whereupon the two assemblies (3, 4) are returned with the aid of the manipulating means to the inoperative position for a further grafting cycle.

2. Machine according to Claim 1, characterized in that the stock (20) cutter device (14) is a blade (14) of triangular shape carrying at its end a stop (17) for determining the length of the cut.

3. Machine according to Claims 1 or 2, characterized in that the stock (20) cutter blade (14) is mounted for sliding, with a spring return means (15), in the top assembly (4).

4. Machine according to Claim 1, characterized in that the scion (19) cutter device (9) consists of two opposite blades (9) having a single taper, fastened to one another and each having the shape of an inverted pyramid whose cutting edges directly face one another.

5. Machine according to Claim 1, characterized in that the stock (20) receiver (8) is a central groove provided in the centre of the top of the bottom assembly (3), the scraper plate (12) bearing against said groove for the positioning of the stock (20).

6. Machine according to Claims 1 to 5, characterized in that the scion (20) support (6) receiver (16) is a centering V into which the scion (20) is inserted.

7. Machine according to Claim 1, characterized in that all the movements are made by a single manipulation means consisting of a pedal and a cable or other electrically, hydraulically or pneumatically operated means.

8. Machine according to Claims 1 to 7, characterized in that the top assembly (4) has the shape of an inverted U.

9. Machine according to Claims 1 to 8, characterized in that the elastic means are springs (10, 11, 13).

10. Machine according to Claims 1 to 9, characterized in that the diameter of the scion (19) is between 1 and 10 millimetres.

11. Machine according to Claims 1 to 10, characterized in that the tapered cut made by the two cutter blades (9) of the bottom assembly (3) is made at a height between 5 and 10 millimetres.

12. Machine according to Claims 1 to 11, characterized in that the angle of the scion (19) tip is between 16 ± 4°.

13. Machine according to Claims 1 to 12, characterized in that the stock (20) cutter device (14) is a blade (14) of triangular shape or any other equivalent means making it possible to form a slit and to open out the two parts and hold them in the form of a V in order to make the insertion.

FIG.1

FIG.2

FIG.3

FIG. 4

FIG. 5

FIG. 6

19

X

20

FIG. 7

19

FIG. 8